# EUROPÄISCHE PATENTANMELDUNG

(11) **EP 1 239 370 A2**
(43) Veröffentlichungstag der Anmeldung: **11.09.2002**
(21) Anmeldenummer: 01127697.9
(22) Anmeldetag: 21.11.2001
(51) Int. Cl.: G06F 11/267, G06F 11/24

(54) **Verfahren zur Überprüfung eines Schnittstellenbausteins**

(30) Priorität: 09.03.2001 DE 10111266
(71) Anmelder: ROBERT BOSCH GMBH, 70442 Stuttgart (DE)
(72) Erfinder: Otterbach, Jens, 57482 Wenden (DE); Taufer, Peter, 71272 Renningen (DE); Tschentscher, Harald, 71723 Grossbottwar (DE); Lukacic, Davor, 72166 Moessingen (DE); Straub, Bernhard, 74391 Erligheim (DE); Ulmer, Michael, 72116 Moessingen (DE)

(57) **Zusammenfassung**

Es wird ein Verfahren zur Überprüfung eines Schnittstellenbausteins vorgeschlagen, wobei nach Aufforderung eines Tests durch einen Prozessor mit einem Datentelegramm der Schnittstellenbaustein abgespeicherte Werte, die Sensorwerte repräsentieren mit einem zweiten Datentelegramm an den Prozessor zurückgibt. Mit diesen festen Sensorwerten kann der Prozessor die Funktion des Schnittstellenbausteins und seinen eigenen Algorithmus überprüfen. Ein Sicherheitsbaustein, der ebenfalls die Sensorwerte aufnimmt, überprüft auch seine Funktion damit, da der Sicherheitsbaustein ein redundanter Hardwarepfad zum Prozessor (1) ist und als Plausibilitätsüberprüfung für die Auslöseentscheidung von Rückhaltemitteln verwendet wird. Der Schnittstellenbaustein wird in einen Testmodus versetzt, sobald er das erste Datentelegramm vom Prozessor erhält und unterdrückt dann die Übertragung von den echten Sensorwerten, die von angeschlossenen Sensoren empfangen wurden.

## Beschreibung

### Stand der Technik

Die Erfindung geht aus von einem Verfahren zur Überprüfung eines Schnittstellenbausteins nach der Gattung des unabhängigen Patentanspruchs.

Es ist bereits bekannt, dass in einem Steuergerät ein Prozessor, beispielsweise ein Mikrocontroller zu vorgegebenen Zeitpunkten, beispielsweise beim Einschalten des Steuergeräts, die vorhandenen ICs, wozu auch ein Schnittstellenbaustein gehört, durch wenigstens ein Datentelegramm überprüft.

### Vorteile der Erfindung

Das erfindungsgemäße Verfahren zur Überprüfung eines Schnittstellenbausteins mit den Merkmalen des unabhängigen Patentanspruchs hat demgegenüber den Vorteil, dass der Schnittstellenbaustein bei der Überprüfung dauerhaft abgespeicherte Werte an den Prozessor mit einem weiteren Datentelegramm zurückgibt und dann der Prozessor anhand der Werte die Überprüfung des Schnittstellenbausteins durchführt. Da diese abgespeicherten Werte Sensorendaten emulieren und zwar die äußeren Grenzen der Sensorenwerte nach unten und nach oben, ist es damit dem Prozessor möglich, zum einen die Funktionsfähigkeit des Schnittstellenbausteins nachzuweisen und zum anderen die Verarbeitung der Sensorendaten bei sich selbst und übrigen Komponenten des Steuergeräts zu überprüfen. Dazu kann dann der Prozessor seinen Algorithmus mit diesen Sensorendaten durchrechnen, um die Funktion für angeschlossene Aktuatoren und dazugehörige Sicherheitsschwellen zu überprüfen. Damit wird dann nicht nur die Kommunikation zwischen dem Schnittstellenbaustein und dem Prozessor überprüft, sondern auch die korrekte Verarbeitung eines Sensorsignals. Der Schnittstellenbaustein, der als IC vorhanden ist, wird damit überprüft, und es ist auch möglich, einen Redundanzpfad für die Überprüfung der Sensorsignale, der unabhängig vom Prozessor eine Auslöseentscheidung gegebenenfalls trifft, auf seine Funktion hin zu testen.

Mit in den abhängigen Ansprüchen aufgeführten Maßnahmen und Weiterbildungen sind vorteilhafte Verbesserungen des im unabhängigen Anspruch angegebenen Verfahrens zur Überprüfung eines Schnittstellenbausteins möglich.

Besonders vorteilhaft ist, dass hier das SPI (Serial Peripherial Interface)-Übertragungsverfahren im Steuergerät verwendet wird, das einerseits ein synchrones Übertragungsverfahren ist und das andererseits in jeder Übertragungsrichtung eine eigene Leitung für die Datenübertragung aufweist.

Darüber hinaus ist es von Vorteil, dass der Schnittstellenbaustein durch das Anforderungsdatentelegramm des Prozessors in einen Testmodus versetzt wird und dabei die echten Sensorwerte von an den Schnittstellenbaustein angeschlossenen Sensoren nicht mehr weiter überträgt, sondern unterdrückt.

Darüber hinaus ist es von Vorteil, dass die Vorrichtung einen Prozessor, einen Schnittstellenbaustein und einen Sicherheitsbaustein aufweist, wobei der Schnittstellenbaustein jeweils mit dem Prozessor und dem Sicherheitsbaustein verbunden ist. Der Sicherheitsbaustein stellt den redundanten Hardwarepfad zur Überprüfung der Sensorwerte in Bezug auf Auslöseentscheidungen dar. Der Schnittstellenbaustein selbst ist mit Sensoren verbindbar, wobei der Schnittstellenbaustein dann über diese Leitung die Sensoren mit Energie versorgt, während die Sensoren über die Leitung dann durch eine digitale Strommodulation ihre Datentelegramme versenden. Diese Datenübertragung ist asynchron. Der Schnittstellenbaustein, der Sicherheitsbaustein und der Prozessor sind in einem Steuergerät angeordnet. Vorteilhafterweise ist dieses Steuergerät mit Rückhaltemitteln verbunden, deren Funktion dann auch mit den emulierten Sensorwerten überprüfbar ist.

### Zeichnung

Ausführungsbeispiele der Erfindung sind in der Zeichnung dargestellt und werden in der nachfolgenden Beschreibung näher erläutert. Es zeigt
Figur 1 ein Blockschaltbild der erfindungsgemäßen Vorrichtung,
Figur 2 den Aufbau einer SPI-Leitung und
Figur 3 ein Flußdiagramm eines erfindungsgemäßen Verfahrens.

### Beschreibung

Ein Prozessor in einem Steuergerät muß vor der Betriebsbereitschaft die angeschlossenen ICs wie einen Schnittstellenbaustein auf seine Funktion hin überprüfen. Erfindungsgemäß beantwortet nun der Schnittstellenbaustein eine solche Anfrage mit im Schnittstellenbaustein fest abgespeicherten Werten, die Sensorwerte emulieren. Die Sensorwerte sind in Registern, die dem Schnittstellenbaustein zugeordnet sind, dauerhaft abgespeichert. Mit diesen Sensorwerten, die der Prozessor dann empfängt, sind die Funktionsüberprüfung des Schnittstellenbausteins, des Algorithmus des Prozessors und eines gegebenenfalls anzusteuernden Aktuators möglich. Darüber hinaus ist es möglich, dass diese Sensorwerte auch von einem Sicherheitsbaustein, der einen hardwaremäßigen Redundanzpfad für den Prozessor darstellt und ebenfalls die Sensorwerte daraufhin überprüft, ob eine Auslöseentscheidung zu treffen ist, überprüfbar.

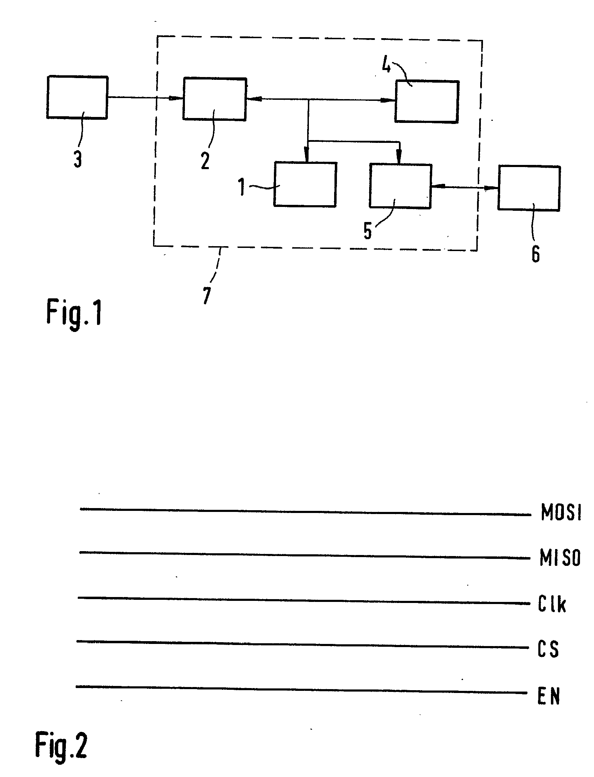

Figur 1 zeigt als Blockschaltbild eine erfindungsgemäße Vorrichtung. Ein Prozessor 1, ein Schnittstellenbaustein 2, ein Sicherheitsbaustein 4 und eine Zündkreisansteuerung 5 sind Komponenten eines Steuergeräts 7. Der Prozessor 1 ist über einen Datenein-/-ausgang mit dem Schnittstellenbaustein 2, dem Sicherheitsbaustein 4 und der Zündkreisansteuerung 5 verbunden. Über einen zweiten Datenein-/-ausgang ist die Zündkreisansteuerung 5 mit Rückhaltemitteln 6 verbunden. Über einen Dateneingang ist der Schnittstellenbaustein 2 mit einem Sensor 3 verbunden. Es ist möglich, dass weitere Komponenten im Steuergerät 7 vorhanden sind und dass mehr als ein Sensor an den Schnittstellenbaustein 2 angeschlossen ist.

Der Prozessor 1 sendet Datentelegramme an die einzelnen Bausteine 2, 4 und 5 und erhält in Antwort darauf entsprechende Datentelegramme von diesen Bausteine zurückgesendet. Es wird hier das SPI (Serial Peripherial Interface)-Übertragungsverfahren eingesetzt.

Die SPI (Serial Peripherial Interface)-Übertragung ist die Datenübertragung zwischen einem Master, dem Prozessor 1, und mehreren Slaves, das sind die einzelnen Bausteine in einem Steuergerät wie der erfindungsgemäße Schnittstellenbaustein 2 oder die Zündkreisansteuerung 5, die zur Überwachung und Zündung der Zündmittel für die Rückhaltemittel verwendet wird. Die SPI-Übetragung ist eine bidirektionale und synnchrone Übertragung. Figur 2 zeigt eine SPI-Leitung, die selbst fünf einzelne Leitungen aufweist. Da es sich um eine synchrone Übertragung handelt, ist eine Taktleitung mit Clk gekennzeichnet vorhanden. Für die Datenübertragung von dem Master 1 zu einem Slave 2, 4 oder 5 ist die MOSI (Master-Out-Slave-In)-Leitung vorhanden, für die Datenübertragung von einem Slave zu dem Master ist hingegen die MISO (Master-In-Slave-Out)-Leitung vorhanden. Um den entsprechenden Slave auszuwählen, wird die CS (Chip Select) Leitung verwendet. Um die SPI-Datenübertragung freizugeben, wird eine Enable-Leitung, hier mit EN gekennzeichnet, verwendet. Die SPI-Leitung geht vom Master 1 aus und verzweigt sich dann zu den einzelnen Slaves 2, 4 und 5, wobei die SPI-Leitung aber immer die fünf einzelnen Leitungen aufweist.

Der Prozessor 1 sendet nun zunächst ein Anforderungstelegramm über die SPI-Leitung an den Schnittstellenbaustein 2. Der Schnittstellenbaustein 2 wird daraufhin in einen Testmodus versetzt und wird dann nicht mehr Sensordaten, die er über Datentelegramme vom Sensor 3 erhält, weiter zum Prozessor 1 und zum Sicherheitsbaustein 4 übertragen. Der Schnittstellenbaustein 2 wird vielmehr aus Registern fest gespeicherte Testwerte an den Prozessor 1 und den Sicherheitsbaustein 4 übertragen. Der Sicherheitsbaustein 4 stellt eine hardwaremäßige redundante Überprüfung der Sensorwerte dar, um sicherzustellen, dass bei einer Fehlfunktion des Prozessors 1 nicht auf Auslösewerte für die Rückhaltemittel 6 erkannt wird. Daher muß auch der Sicherheitsbaustein 4 mit diesen Testsensorwerten, das sind die emulierten Sensorwerte, getestet werden. Die Testsensorwerte stellen die obere und untere Grenze der Sensorwerte dar. Sie würden also eine Auslösung erzwingen, aber da der Prozessor einen Test initiiert hat, wird es zu keiner solchen Auslösung kommen. Dafür wird die Zündkreisansteuerung 5 entsprechend vom Prozessor 1 angesteuert. Der Prozessor 1 kann nun mit diesen Sensorwerten seinen Auslösealgorithmus rechnen und die Schwellwerte im Auslösealgorithmus überprüfen. Die gleiche Prozedur führt der Sicherheitsbaustein 4 durch. Da ein oberer Grenzwert für die Sensordaten vorhanden ist, wird eine Auslöseentscheidung von dem Prozessor 1 und dem Sicherheitsbaustein 4 getroffen und die Zündkreisansteuerung wird daraufhin die Rückhaltemittel 6 ansteuern, aber ohne dass es zu einer Auslösung kommt. Damit wird durch die emulierten Sensorwerte aus den Registern des Schnittstellenbausteins 2 ein kompletter Test der Verarbeitung der Sensorwerte im Steuergerät durchgeführt.

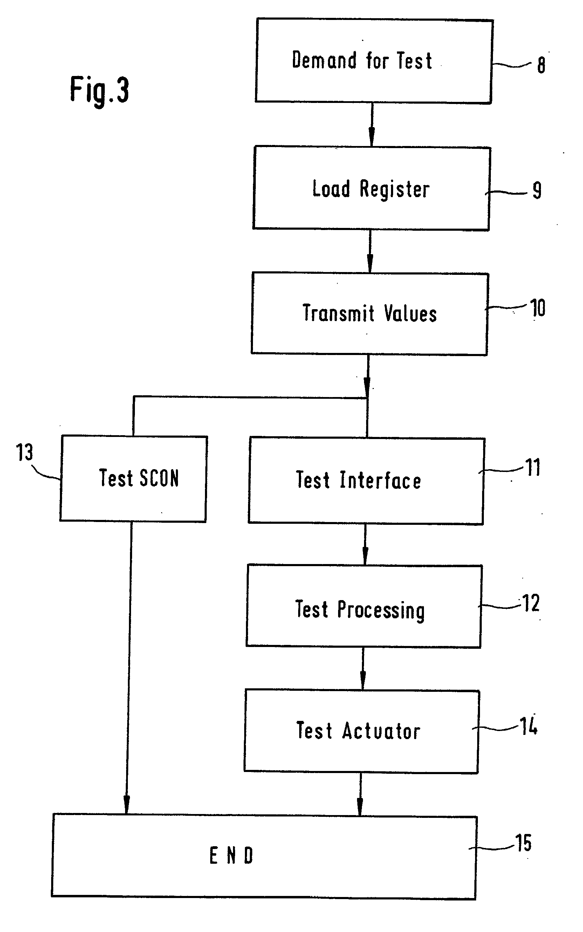

Figur 3 zeigt als Flußdiagramm das erfindungsgemäße Verfahren. In Verfahrensschritt 8, bezeichnet mit Demand for Test, übersendet der Prozessor 1 an den Schnittstellenbaustein 2 über die SPI-Leitungen ein Datentelegramm, indem er den Schnittstellenbaustein 2 auffordert, einen Test mit den Registerwerten durchzuführen. In Verfahrensschritt 9 lädt daraufhin der Schnittstellenbaustein 2 aus seinen Registern die fest abgespeicherten oberen und unteren Grenzwerte für die Sensordaten und versetzt sich in einen Testmodus, um die aktuellen Sensordaten vom Sensor 3 zu unterdrücken und nicht weiter an den Prozessor 1 zu übertragen. In Verfahrensschritt 10 werden diese Werte über die SPI-Leitung von dem Schnittstellenbaustein 2 an den Prozessor 1 und den Sicherheitsbaustein 4 übertragen.

In Verfahrensschritt 11 testet nun der Prozessor 1 anhand der empfangenen Werte den Schnittstellenbaustein 2 und dann auch seinen eigenen Auslösealgorithmus. Dazu verwendet er die Sensorwerte als Eingabeparameter für seinen Auslösealgorithmus und überprüft, ob eine Auslösung erkannt wird. In Verfahrensschritt 12 wird diese Verarbeitung durchgeführt. Mit der Auslöseentscheidung wird dann in Verfahrensschritt 14 die Ansteuerung der Zündkreisansteuerung 5 überprüft und auch die Ansteuerung des Aktuators der Rückhaltemittel 6. Parallel dazu testet auch der Sicherheitsbaustein 4 seine Funktion. Auch er muß zumindest mit dem oberen Grenzwert der Sensorwerte eine Auslösung erkennen. Wird bei einem der Tests ein Fehler entdeckt, wird die Funktion des Steuergeräts unterbrochen. In Verfahrensschritt 15 endet das erfindungsgemäße Verfahren.

## Patentansprüche

1. Verfahren zur Überprüfung eines Schnittstellenbausteins (2), wobei die Überprüfung von einem Prozessor (1) durch eine Übertragung eines ersten Datentelegramms zu dem Schnittstellenbaustein (2) eingeleitet wird, **dadurch gekennzeichnet, dass** der Schnittstellenbaustein (2) als Antwort auf das erste Datentelegramm dauerhaft in Registern abgespeicherte Werte an den Prozessor (1) mit einem zweiten Datentelegramm zurückgibt und der Prozessor (1) anhand der Werte die Überprüfung des Schnittstellenbausteins (2) durchführt.

2. Verfahren nach Anspruch 1, **dadurch gekennzeichnet, dass** die Datentelegramme synchron übertragen werden.

3. Verfahren nach Anspruch 1 oder 2, **dadurch gekennzeichnet, dass** das erste Datentelegramm über eine erste Leitung und das zweite Datentelegramm über eine zweite Leitung übertragen werden.

4. Verfahren nach einem der Ansprüche 1 bis 3, **dadurch gekennzeichnet, dass** die abgespeicherten Werte eine oberen und untere Grenze von Sensorwerten darstellen.

5. Verfahren nach Anspruch 4, **dadurch gekennzeichnet, dass** der Prozessor (1) mit den Werten eine Verarbeitung der Sensorwerte überprüft.

6. Verfahren nach Anspruch 4 oder 5, **dadurch gekennzeichnet, dass** anhand der Werte eine Funktion eines Sicherheitsbausteins (4) überprüft wird, wobei der Sicherheitsbaustein (4) mit dem Schnittstellenbaustein (2) verbunden ist.

7. Verfahren nach einem der vorhergehenden Ansprüche, **dadurch gekennzeichnet, dass** nach Empfang des ersten Datentelegramms der Schnittstellenbaustein (2) in einen Testmodus versetzt wird und daher Sensorwerte, die von den angeschlossenen Sensoren (3) empfangen wurden, unterdrückt werden.

8. Vorrichtung zur Durchführung des Verfahrens nach einem der Ansprüche 1 bis 7, **dadurch gekennzeichnet, dass** die Vorrichtung einen Prozessor (1), einen Schnittstellenbaustein (2) und einen Sicherheitbaustein (4) aufweist, wobei der Schnittstellenbaustein (2) jeweils mit dem Prozessor (1) und dem Sicherheitsbaustein (4) verbunden ist.

9. Vorrichtung nach Anspruch 8, **dadurch gekennzeichnet, dass** der Schnittstellenbaustein (2) mit wenigstens einem Sensor (3) verbindbar ist.

10. Vorrichtung nach Anspruch 9, **dadurch gekennzeichnet, dass** der Prozessor (1), der Schnittstellenbaustein (2) und der Sicherheitsbaustein (4) in einem Steuergerät (7) angeordnet sind.

11. Vorrichtung nach Anspruch 10, **dadurch gekennzeichnet, dass** das Steuergerät (7) mit Rückhaltemitteln (6) verbindbar ist.
